# EUROPEAN PATENT SPECIFICATION

(11) **EP 0 621 174 B1**
(45) Date of publication and mention of the grant of the patent: **04.02.1998**
(21) Application number: 93924832.4
(22) Date of filing: 16.11.1993
(51) Int. Cl.: B64D 11/06, B61D 33/00

(54) **SEAT FOR PHYSICALLY HANDICAPPED PERSONS**
Sitz für körperbehinderte Personen
SIEGE POUR HANDICAPES PHYSIQUES

(30) Priority: 16.11.1992 JP 331071/92; 26.11.1992 JP 339742/92
(43) Date of publication of application: 26.10.1994
(73) Proprietor: KOITO INDUSTRIES, LTD., Yokohama-shi Kanagawa 244 (JP)
(72) Inventor: KURANAMI, Shunji, Kamakura-shi, Kanagawa 248 (JP)
(74) Representative: Fuhlendorf, Jörn, Dipl.-Ing.
(86) International application number: JP9301679
(87) International publication number: WO9411247

(56) References cited:
- DE-A- 3 512 953
- JP-A- 3 050 037
- JP-U- 1 131 357
- JP-U-64 021 653

## Description

### TECHNICAL FIELD

The present invention relates to a vehicular seat for a disabled person wherein, in order that a disabled person can easily sit on or separate from a seat which is used for various vehicles such as an airplane, ship or rolling stock, the front side or the whole of an armrest formed on the walkway side of the seat is turned in the vertical direction, to thereby temporarily shift the armrest from the position of obstructing the sitting or separating action on or from the seat. More exactly, the invention relates to a seat for a vehicle comprising a seat frame, a seat back, a seat bottom and at least one armrest comprising an armrest frame, a wing extending in the vertical direction and supported to said seat frame by means of a supporting member fixed to said armrest frame and a table contained in said wing.

### BACKGROUND ART

In seats for vehicles such as an airplane, ship and rolling stock, except for the seats in the first class or business class passenger cabins, such armrests as to be fixed on the side portions of the seats have been generally used. Further, in the first class seat having a wide seat pitch, a wheelchair is accessible to the front of the seat, so that a disabled person can relatively easily move on the seat from the front of the seat and sit on the seat; however, in the economy class or business class seat, the seat pitch is narrow and thereby the wheelchair cannot be moved to be close to the front of the seat, so that the disabled person must sit on or separate from the seat while leaving the wheelchair on the walkway side of the seat, which causes a problem that the armrest obstructs the sitting or separating action on or from the seat. To cope with this problem, there has been proposed a vehicular seat having the so-called jumping type armrest capable of vertically turning the front side of the armrest for allowing a disabled person to sit on or separate from the seat therethrough. However, in this construction, even when a stay for supporting the front side of the armrest is provided, the strength or the supporting force of the armrest in the normal service is weak, to thus lower the reliability and durability.

For seats disposed at the front row of an airplane even in the first class, or for seats in the business class, the so-called armrest with a wing capable of containing a table in a wing constituting the armrest is used. Further, in seats for the first class, all the seats include armrests with wings capable of containing tables in the wings. Even for the seat having the above armrest with a wing, there has been required such a structure that the armrest can be shifted from the side end portion of the seat for allowing a disabled person to easily sit on or separate from the seat from the walkway side.

As seat showing the features according to the preamble of claim 1 is disclosed for example in JP 35 00 37. This document discloses a table system which can be stored in an armrest so as to be used in a seat for a vehicle. This armrest has means for forming a segment storing the table mechanism within said seat. The table is stored in the armrest fixed to the side of the seat. The armrest is not rotated out of the side part of the seat and is not removed out of it. Accordingly it is impossible for a disabled person for example using a wheelchair to move on the seat easily from the walkway side of the seat.

DE-OS 35 12 953 discloses a seat for a vehicle showing armrests with rotating centers acting as holding segments, which are formed inside the frames of the seats. The armrest is constructed to rotate towards an outside of the seat, which is not possible for armrests having a wing.

JP 64-21653 discloses a seat with an armrest constructed such that it can be moved in a vertical direction, and the upper surfaces of the armrest are substantially in flush with the upper surface of the seat. The armrest can be moved to optional heights and held at these positions by means of driving devices. This is not possible for armrests having a wing containing a table.

JP 1-131357 discloses a seat with an armrest attached to a supporting shaft in such a way that it may be freely rotated in a vertical direction upwards. An armrest with a wing would prevent the access to this seat in this position.

Taking the above problem into consideration, the present invention has been made, and its object is to provide a vehicle seat wherein, even for an armrest with a wing capable of containing a table in said wing, the armrest can be shifted from the side end portion of the seat for allowing a disabled person to easily sit on or separate from the seat.

### SUMMARY OF THE INVENTION

A seat for a disabled person according to the present invention has the following subject matter: It comprises a seat for a vehicle comprising a seat frame, a seat back, a seat bottom and at least one armrest comprising an armrest frame, a wing extending in the vertical direction and supported to said seat frame by means of a supporting member fixed to said armrest frame and a table contained in said wing, characterized in that said armrest is movable in a downward direction between a first or regular position where the access to said seat bottom is possible only from the front of said seat and a second or access position where at least a side portion of said seat bottom is exposed and that said armrest is locked in said first or regular position by means of a locking device situated in said wing and connecting said wing with a supporting device, said supporting device forming part of or being connected to said seat frame.

With the above construction, when the locking of the locking device is released, the front side of the armrest can be shifted downward. Accordingly, even for the armrest with a wing capable of containing a table in a wing, the armrest can be shifted so as to be sunk down from the side end portion of the seat. As a result, as compared with the case that the armrest is jumped upward just as in the prior art seat, it is possible to release a sufficient wide space of the seat bottom for the sitting or separating action on or from the seat, which allows a disabled person to easily sit on or separate from the seat from the walkway side of the seat.

### BRIEF DESCRIPTION OF THE DRAWINGS

Fig. 1 is a whole perspective view showing a first embodiment of a seat for a disabled person according to the present invention;
Fig. 2 is an enlarged side view showing such a state that the seats of Fig. 1 are arranged in the longitudinal direction;
Fig. 3 is a side view showing main parts of Fig. 2;
Fig. 4 is a front view showing main parts of Fig. 3;
Fig. 5 is an enlarged view of main parts of Fig. 4, with parts partially cut-out;
Fig. 6 is a side view showing main parts of Fig. 5;
Fig. 7 is an enlarged perspective view showing main parts of Fig. 5;
Fig. 8 is an enlarged front view of main parts of a modification of a locking device before an arm rest is locked;
Fig. 9 is an enlarged front view of main parts of the modification of Fig. 8 after the arm rest is locked;
Fig. 10 is an enlarged side view showing one structure of an angle restricting plate;
Fig. 11 is a whole perspective view showing a second embodiment of a seat for a disabled person according to the present invention;
Fig. 12 is a side view showing main parts of Fig. 11;
Fig. 13 is a front view showing main parts of Fig. 12;
Fig. 14 is a sectional plan view of main parts of Fig. 11;
Fig. 15 is a sectional view taken along the line XV-XV of Fig. 14; and
Fig. 16 is a perspective view of main parts showing a method of mounting sliders to rails.

### DESCRIPTION OF THE PREFERRED EMBODIMENTS

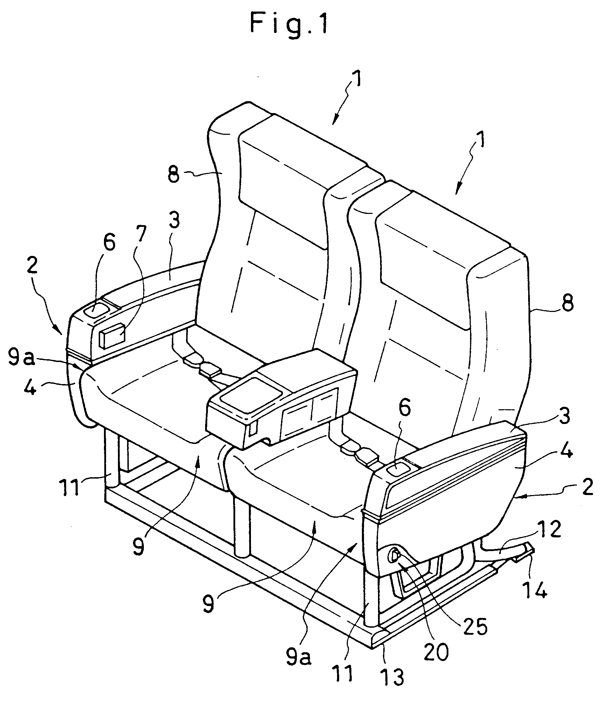

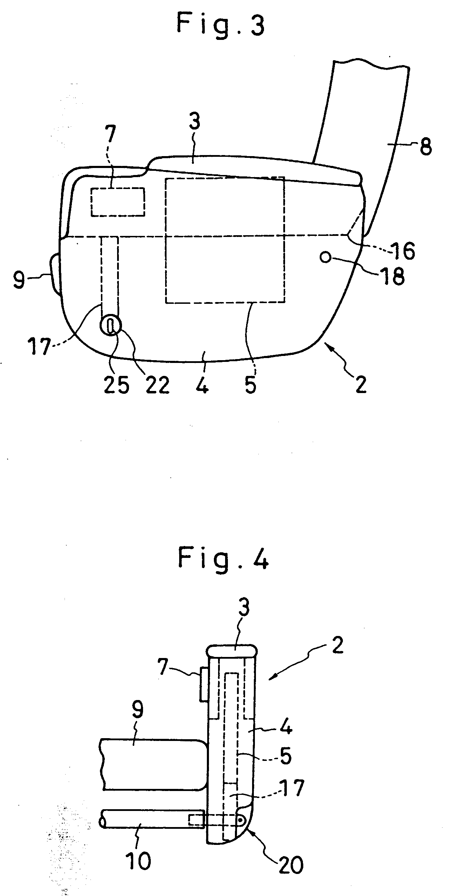

Hereinafter, a first embodiment of a seat for a disabled person according to the present invention will be described with reference to Figs. 1 to 7. The seat for a disabled person according to this embodiment is mounted to be disposed in a passenger cabin of an airplane. In the example shown in the figures, as shown in the whole view of Fig. 1, a plurality of seats 1 and 1 are articulated to constitute a set of seats for two passengers or three passengers. An armrest 2 is provided on one side end portion, that is, on the walkway side of the seat 1. The armrest 2 comprises the so-called armrest with a wing which contains a table 5 in a wing 4 by opening upward an arm cap 3 formed on the upper surface of the armrest 2. Further, an ashtray 6 is provided on the armrest 2 in front of the arm cap 3. Additionally, a PCU (Printed Circuit Unit) 7, which includes operating buttons for adjusting the sound-volume of an earphone or switching channels, is provided on the inner surface of the seat side of the wing 4.

A base frame tube 10 adapted to form a seat frame for supporting a seat-back 8, a seat-bottom 9 and the like is supported by a front leg 11 and a rear leg 12. The lower ends of the front leg 11 and the rear leg 12 are fixed on a rail R disposed on the floor side by means of mounting fixtures 13 and 14, respectively. In addition, a shock absorber 15 is interposed between the front leg 11 and the rear leg 12 for absorbing the shock load applied to the seat in the case of emergency. The above armrest 2 is usually supported on the end portion of the base frame tube 10 by means of a stay 17 which is fixed on the lower surface of an armrest frame 16 forming the above armrest so as to extend downward therefrom. Further, the armrest 2 is fixed to be turned vertically with respect to the seat frame by a horizontal rotational shaft 18 provided at a slightly higher position on the rear portion of the armrest 2. Additionally, the outer surface of the armrest 2 is covered by an armrest cover 19.

The connection of the stay 17 to the base frame tube 10 is performed by a locking device 20 enabling the locking and the releasing of the locking. Namely, a sleeve 21, which is positioned coaxially with the base frame tube 10 in the normal state, is provided at the lower end of the stay 17 for connecting and supporting the armrest 2 with respect to the base frame tube 10. Further, a column-like sliding shaft 22 being slidable both in the sleeve 21 and in the base frame tube 10 is disposed, and which can be removably inserted in the base frame tube 10. Additionally, a pair of guide pins 23 are formed around the outer peripheral surface of the sliding shaft 22 so as to oppositely project in the diameter direction, and substantially inverse U-shaped guide grooves 24 for inserting the guide pins 23 therethrough are formed around the cylindrical wall of the sleeve 21 in which the sliding shaft 22 is turnably fitted. Each of the guide pins 23 is movable along the formation direction of the guide groove 24 in such a state as to be inserted in the guide groove 24. Accordingly, by rotation of the sliding 22 around its axis, the guide pins 23 projectingly provided around the outer peripheral surface of the sliding shaft 22 at both the ends in the diameter direction are each operated to be engaged with or disengaged from the U-shaped terminals 24a or 24c of the guide grooves 24.

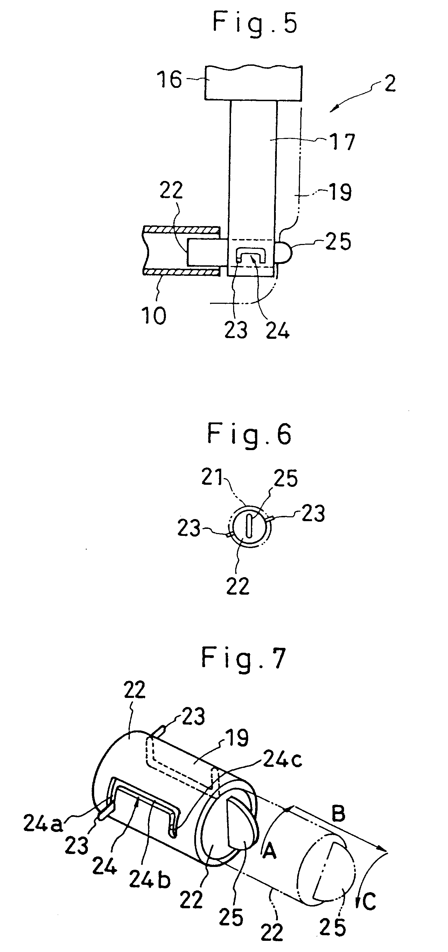

A knob 25 is provided on the axial outer end portion of the sliding shaft 22, so that a passenger or a crewman holds the knob 25, and can turn the sliding shaft 22 along the guide groove grooves 24 and simultaneously push or pull it in the axial direction. By pulling or pushing of the knob 25, the sliding shaft 22 and the guide pins 23 projectingly provided around the sliding shaft 22 are moved in the longitudinal direction, that is, in the axial direction along central portions 24b of the U-shaped guide grooves 24, so that the sliding shaft 22 can be removed from or fitted in the base frame tube 10. The central portion 24b of the guide groove 24 is formed in such a length that the sliding shaft 22 can be sufficiently fitted in or removed from the base frame tube 10 (see Fig. 7).

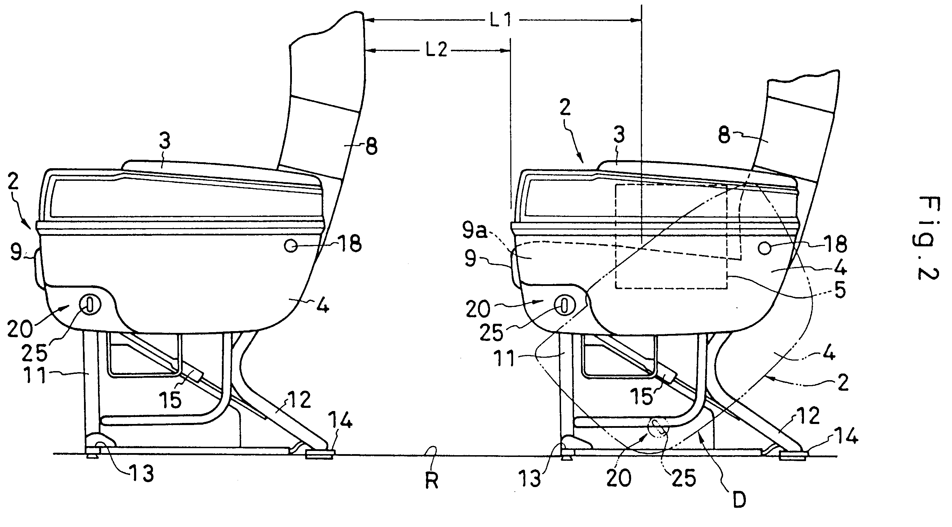

In the seat for a disabled person according to this embodiment, when a disabled person stops the wheelchair at the side of the seat to be sit on the seat, at first, he turns the knob 25 clockwise (in the direction of the arrow A) to remove the guide pins 23 front the one-sided U-shaped terminals 24a of the guide grooves 24. Then, he holds the knob 25 and pulls it on this side (in the direction of the arrow B) to move the guide pins 23 along the central portions 24b of the U-shaped guide grooves 24 for removing the sliding shaft 22 from the base frame tube 10. With this operation, the locking of the stay 17, that is, the armrest 2 to the base frame tube 10 is released, so that the armrest 2 is in such a state as to be turnable around the rotational shaft 18. Next, the disabled person moves the guide pins 23 while turning it counterclockwise to engaged the guide pins 23 with the other terminals 24c of the guide grooves 24 (in the direction of the arrow C). Thus, he can turn the armrest 2 counterclockwise by its deadweight, or pressing-down by the hand, and can sink downward the front side of the armrest 2 (the position shown as the arrow D). In such a state that the front side of the armrest 2 is moved downward, a side portion 9a of the seat-bottom 9 is sufficiently exposed, so that the disabled person can ensure the space enough to move from the wheelchair and to sit on the seat. Namely, as shown in Fig. 2, in the conventional seat type, the seat releasing dimension between the back surface of a seat-back 8 of the front seat and the armrest 2 of the rear seat is L2; however, according to the present invention, after the front end portion of the armrest 2 is moved downward, the seat releasing dimension between the back surface of the seat-back 8 and the armrest 2 becomes L1 (L2 < L1). The dimension L1, which is enough for the disabled person to move his waist from the wheelchair to the side portion of the seat-bottom 9, can be formed on the side portion of the seat. This makes it possible to sufficiently ensure the space L1 required for the movement of the disabled person as compared with the conventional seat.

After completing the movement to sit down on the seat, the disabled person lifts up the armrest 2 and returns it to the usable position, and presses the knob 25 in the reversed direction so as to insert the sliding shaft 22 in the base frame tube 10. After that, by turning of the knob 25 in the direction reversed to the direction described-above, the guide pins 23 are engaged with the one-sided U-shaped terminals 24a of the guide grooves 24 again, thus performing locking action. As described above, according to this embodiment, the locking action of the locking device 20 is easily released to release the locking of the armrest 2 to the seat frame, so that the armrest 2 is freely turned to around the rotational shaft 18. This makes it possible to largely release the side portion 9a of the seat-bottom 9, and hence to ensure a sufficient space required for the movement of the disabled person from the wheelchair to the seat. Further, even for the prior art armrest with wing being impossible to be constructed as the so-called jumping type in which the armrest is jumped upward, the side portion 9a of the seat-bottom 9 can be sufficiently exposed by the movement of the front side of the armrest 2 itself so as to be sunk downward, as a result of which the disabled person can seat on or separate from the seat even if the seat pitch is narrow.

Additionally, in order that the sliding shaft 22 is easily inserted in the base frame tube 10 again, a spring (not shown) for biasing the sliding shaft 22 toward the inner side of the base frame tube 10 may be provided. In this case, for preventing the biased sliding shaft 22 from being caught by the other portions in such a state that the armrest 2 is turned, a guide plate (not shown) continuous front the end portion of the base frame tube 10 may be provided to guide the end portion of the insertion side of the sliding shaft 22 for allowing the sliding shaft 22 to be easily re-inserted when the armrest 2 is returned.

Further, in order that the guide pins 23 are prevented from being carelessly removed from the U-shaped terminals 24a and 24c of the guide grooves 24 due to vibration or the like, a spring (not shown) for biasing the guide pins 23 in the circumferential direction may be provided on the sliding shaft 22. Further, although the armrest 2 is so constructed as to be turned around the rotational shaft 18, a stopper (not shown) may be provided for preventing the front side of the armrest 2 from being not excessively turned upward. In this case, the stopper is effective to position the armrest 2 when the armrest 2 is returned, and to make easy the return of the armrest 2. Further, in order that the armrest 2 can be easily turned after releasing the locking of the locking device 20, a spring (not shown) for canceling the weight of the armrest 2 may be provided.

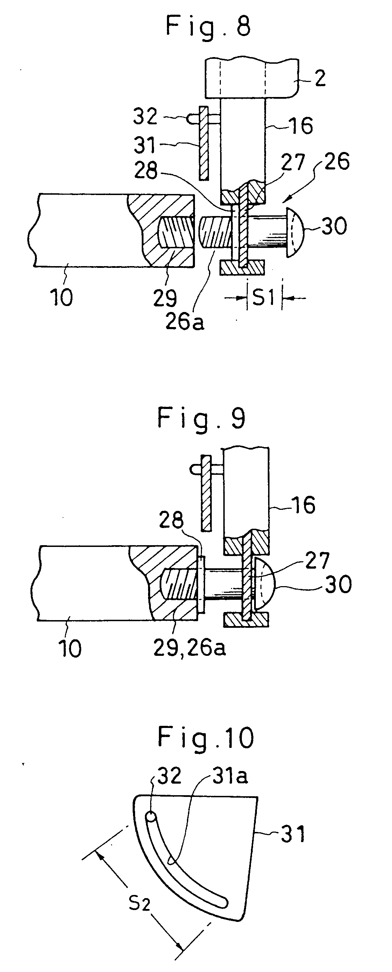

Figs. 8 to 10 show a modification of a locking mechanism 20, where in a locking screw 26 is used in place of the above-described sliding shaft 22. The locking screw 26 is mounted in such a manner as to be axially slidable with respect to a locking guide 27 formed on the lower end of the armrest 2 in the range of a specified stroke S1. Further, a male screw 26a is threaded at the leading edge of the locking screw 26 and a stopper 28 is formed on the inner end of the male screw 26a for preventing the fallout of the locking screw 26 to the surface side of the locking guide 27.

The stopper 28 prevents the further screwing of the male screw 26a of the locking screw 26 in such a state that the screw 26a is perfectly screwed with a female screw 29 formed on the base frame tube 10, and the reby functions to prevent the breakage of the locking guide 27 due to the excessive-fastening of the male screw 26a. A knob 30 is integrally formed on a head portion of the locking screw 26, that is, on the surface side of the locking guide 27. By suitable turning of the knob 30, the locking screw 26 can be fastened to and loosened from the female screw 29 on the base frame tube 10 side.

In addition, reference numeral 31 indicates an angle restricting plate substantially fan-shaped, which is fixed on a base frame (not shown) side of the seat. In the angle restricting plate 31, a circular-arc guide groove 31a is formed along the inner side of an outer peripheral circular-arc portion, and a pin 32 projecting from the armrest frame 16 side is inserted in the guide groove 31a. In the range of a formation length S2 of the guide groove 31a, the front side of the armrest 2 can be shifted in the vertical direction.

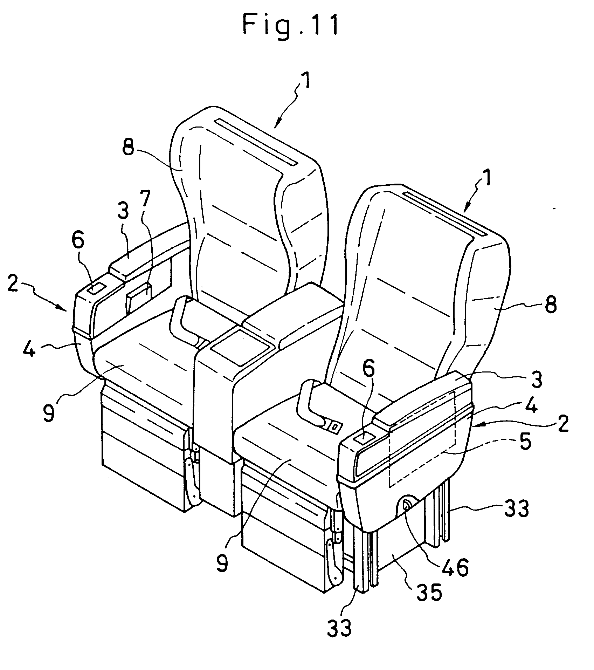

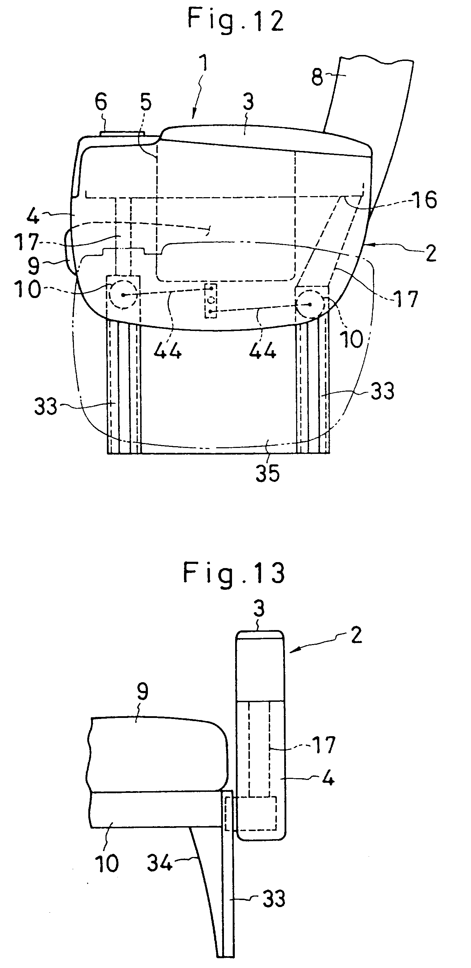

Figs. 11 to 16 show a second embodiment of a seat for a disabled person. Parts corresponding to those in the first embodiment are indicated at the same symbols, and the explanation thereof is omitted.

In this embodiment, an armrest 2 is usually supported on the side end portion of base frame tubes 10 by a pair of stays 17 and 17 which are longitudinally fixed on the lower surface of an arm rest frame 16 forming the skeleton of the arm rest 2 in such a manner as to extend downward. At this time, the arm rest 2 is supported through rails 33 and 33 vertically fixed on the side end portions of the base frame tubes 10, and brackets 34 are fixedly provided between the rails 33 and 33 and the base frame tubes 10 to prevent the tilting of the rails 33 and 33. Further, a rail supporting plate 35 is interposed between both the rails 33 and 33 for accurately keeping the distance between the two rails 33 and 33 disposed oppositely to each other.

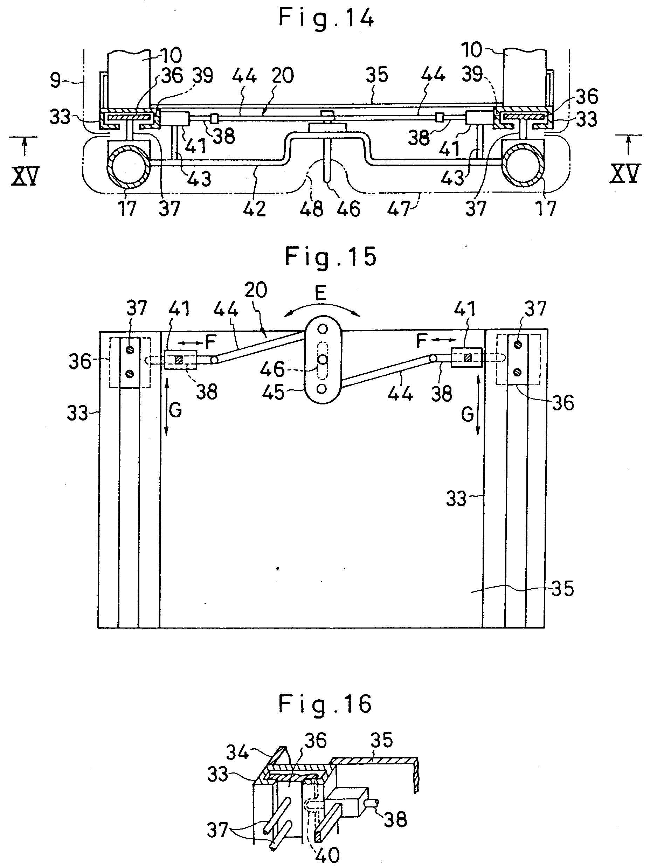

Each of the rails 33 and 33 is substantially U-shaped in the cross-section (see Fig. 14), and a slider 36 is inserted in the rail 33 so as to be slidably moved in the vertical direction. The sliders 36 are fixed on the arm rest 2 side. Namely, the sliders 36 are each fixed at the stays 17 and 17 on the armrest 2 side by two supporting shafts 37 and 37 provided so as to correspond to opening portions formed on the side surfaces of the rails 33. As shown in Figs. 14 and 15, a locking device 20 is formed at the uppermost ends of the rails 33 for locking the sliders 36 in such a state that the sliders 36 are positioned at the uppermost ends of the rails 33. The locking device 20 has such a mechanism as to insert lock pins 38 in the sliders 36 and the rails 33. Namely, each lock pin 38 passes through a though-hole 39 perforated on the rail 33, and further, the leading edge of the lock pin 38 is fitted in a recessed portion 40 formed on the slider 36 (see Fig. 16). Further, the locking pin 38 is supported by a pin guide 41 so as to be movable in the horizontal direction, and is fixed on a connecting lever 42 provided inside the armrest 2 by a supporting member 43, The connecting lever 42 is intended to connect the two stays 17 and 17 to each other.

A link 44 is turnably pin-connected at the other end of the locking pin 38. The other end of the link 44 is turnably pin-connected on the upper end or the lower end of a crank 45. The crank 45 is mounted at a substantially central portion of the connecting lever 42 in such a manner as to be turnable around the center portion of the crank 44 (in the direction of the arrow E). The crank 45 can be freely turned by a knob 46 formed on the crank 45. Namely, the knob 46 is fixed on the crank 45, and passes through a side panel 47 of the armrest 2 to be exposed to the outside. The exposed portion of the knob 46 lies in a recessed portion 48 formed on the side panel 47, to be thus easily held by the hand.

In the seat for a disabled person according to this embodiment, when the user such as a disabled person stops the wheelchair at the side of the seat to be sit on the seat, he firstly rotates the knob 45 clockwise to turn the crank 45 for removing the locking pins 38 from the recessed portions 40 of the sliders 36 and the though-holes 39 of the rails 33 through the link 44 (in the direction of the arrow F). With this action, the locking of the armrest 2 is released, which makes it possible to move the sliders 36 downward along the rails 33 (in the direction of the arrow G). In such a state, he pushes down the armrest 2, and moves the whole armrest 2 so as to sink it under the seat. At this time, the sliders 36 are slid downward within the rails 33 to descend the armrest 2. Further, the locking pins 38 are inserted in the pin guides 41, and the pin guides 41 are slid along the side surfaces of the rails 33 to be moved downward. As the armrest 2 is sufficiently sunk, the side surface 9a of the seat-bottom 9 can be sufficiently exposed from the upper portion of the armrest 2. Thus, the disabled person can move from the wheelchair to the seat and sit on the seat. The armrest 2 does not obstruct the above movement of the disabled person.

After completing the movement for the seating, the disabled person takes up the armrest 2 again, to return it to the normal service position, and rotates the knob 46 in the reversed direction. With this action, the leading edges of the locking pins 38 are fitted in the recessed portions 40 of the sliders 36 again to be thus engaged therewith. After the locking is performed in the above-described manner, the sliders 36 provided on the stays 17 of the armrest 2 are supported in the vicinity of the ends portions of the base frame tubes 10 of the seat through the rails 33.

As described above, in the seat for a disabled person according to the present invention, the side surface of the seat-bottom can be sufficiently exposed by moving downward the front end or the whole of the armrest, which enables the disabled person to easily sit on or separate from the seat from the side of the seat. Therefore, the extremely large effect can be obtained by carrying out the present invention.

### POSSIBILITY OF EXPLOITATION IN INDUSTRY

A seat for a disabled person according to the present invention is characterized in that said armrest is movable in a downward direction between a first or regular position where the access to said seat bottom is possible only from the front of said seat and a second or access position where at least a side portion of said seat bottom is exposed and that said armrest is locked in said first or regular position by means of a locking device situated in said wing and connecting said wing with a supporting device, said supporting device forming part of or being connected to said seat frame. Accordingly, even in the case that the seat pitch is narrow and the armrest is of a type having a wing containing a table just as in a business class seat of an airplane, a disabled person can easily sit on or separate from the seat by shifting the armrest to largely expose the surface of the seat bottom. Further, the seat for a disabled person can be carried out as a seat with an armrest for various vehicles such as an airplane, ship and rolling stock, and as well as contribute to the social rehabilitation of disabled persons.

## Claims

1. A seat for a vehicle comprising a seat frame, a seat back (8), a seat bottom (9) and at least one armrest (2) comprising an armrest frame (16), a wing (4) extending in the vertical direction and supported to said seat frame by means of a supporting member (17) fixed to said armrest frame (16) and a table (5) contained in said wing (4), characterized in that said armrest (2) is movable in a downward direction between a first or regular position where the access to said seat bottom (9) is possible only from the front of said seat and a second or access position where at least a side portion (9a) of said seat bottom (9) is exposed and that said armrest (2) is locked in said first or regular position by means of a locking device (20) situated in said wing (4) and connecting said wing (4) with a supporting device (10, 33), said supporting device (10, 33) forming part of or being connected to said seat frame.

2. A seat according to claim 1, characterized in that said armrest (2) is fixed by a horizontal rotational shaft (18) provided on the rear portion of said armrest (2) and that said locking device (20) comprises a fixing member (22, 26) which can be removably inserted into a base frame tube (10) adapted to form said seat frame.

3. A seat according to claim 2, characterized in that said fixing member is a column-like sliding shaft (22) which is disposed in a sleeve (21) provided at the lower end of said supporting member (17) and positioned coaxially with the base frame tube (10) adapted to form said seat frame.

4. A seat according to claim 3, characterized in that a spring member is provided for biasing said sliding shaft (22) towards the inner side of said base frame tube (10).

5. A seat according to claim 4, characterized in that a guide plate continuous from the end portion of said base frame tube (10) is provided.

6. A seat according to at least one of the claims 3 to 5, characterized in that said sliding shaft comprises locking means (23) engaging in complementary locking means (24) provided at said sliding shaft (23).

7. A seat according to claim 6, characterized in that said locking means are a pair of guide pins (23) formed around the outer peripheral surface of said sliding shaft (22) so as to oppositely project in the diameter direction and that said complementary locking means are substantially inverse U-shaped guide grooves (24) formed around the cylindrical wall of said sleeve (21).

8. A seat according to claim 7, characterized in that a spring member is provided for biasing said guide pins (23) in the circumferential direction.

9. A seat according to claim 2, characterized in that said fixing member is a locking screw (26) provided with a male screw (26a) screwable with a female screw (29) formed on said base frame tube (10).

10. A seat according to claim 9, characterized in that a locking guide (27) is provided preventing said locking screw (26) from falling out to the surface side of said locking guide (27) or from excessive fastening of said male screw (26a) respectively.

11. A seat according to at least one of the claims 2 to 10, characterized in that an angle restricting plate (31) is fixed to said base frame, said angle restricting plate (31) comprising a circular-arc guide groove (31a) and that a pin (32) projecting from said armrest frame (16) is inserted into said guide groove (31a).

12. A seat according to at least one of the claims 2 to 11, characterized in that a spring member is provided for canceling the weight of said armrest (2).

13. A seat according to claim 1, characterized in that sliders (36) are fixed to said armrest (2) and movably inserted into rails (33) vertically fixed to said seat frame and that said locking device (20) comprises locking elements (38) which can be removably passed through said sliders (36) and said rails (33).

14. A seat according to claim 13, characterized in that a link member (44) is turnably disposed between said locking elements (38) and a crank member (45).

15. A seat according to claim 13 or 14, characterized in that said locking elements (38) are guided by guiding means (41) fixed on supporting means (43).

16. A seat according to claim 15, characterized in that said supporting means (43) are fixed to a connecting member (42) connecting said supporting members (17).

17. A seat according to claim 16, characterized in that said crank member (45) is fixed to said connecting member (42).

18. A seat according to at least one of the claims 13 to 17, characterized in that said locking elements are lock pins (38) passing through though-holes (39) perforated on said rails (33), the leading edges of said lock pins (38) fitting in recessed portions (40) formed on said sliders (36).

19. A seat according to at least one of the claims 13 to 18, characterized in that brackets (34) are fixedly provided between said rails (33) and base frame tubes (10) to prevent the tilting of said rails (33).

20. A seat according to at least one of the claims 13 to 19, characterized in that a rail supporting plate (35) is interposed between two rails (33) for keeping the distance between said rails (33).

21. A seat according to at least one of the preceding claims, characterized in that said locking device (20) comprises moving means (25,30,46) projecting from the outer surface of said wing (4).

## Patentansprüche

1. Fahrzeugsitz, bestehend aus einem Sitzgestell, einer Sitzlehne (8), einer Sitzfläche (9) und mindestens einer Armlehne (2) mit Armlehnenrahmen (16), einem Flügel (4), der sich in der Vertikalrichtung erstreckt, auf dem Sitzgestell mit Hilfe eines Stützglieds (17) gelagert und auf dem Armlehnengestell (16) befestigt ist, und einem in dem Flügel (4) eingebauten Tisch (5), **dadurch gekennzeichnet**, dass die Armlehne (2) abwärts zwischen einer ersten oder Grundstellung, in welcher die Sitzfläche (9) nur von der Vorderseite des Fahrzeugsitzes aus zugänglich ist, und einer zweiten oder Zugangsstellung bewegt werden kann, wobei mindestens ein Seitenabschnitt (9a) der Sitzfläche (9) freiliegt, und dass die Armlehne (2) in der ersten oder Grundstellung mit Hilfe einer in dem Flügel (4) angebrachten Arretiervorrichtung (20), welche den Flügel (4) mit einer Stützvorrichtung (10, 33) verbindet, verriegelt werden kann, wobei die Stützvorrichtung (10, 33) einen Teil des Sitzgestells bildet oder mit diesem verbunden ist.

2. Sitz gemäß Anspruch 1, dadurch gekennzeichnet, dass die Armlehne (2) mit Hilfe einer in der Horizontalrichtung drehbaren, am hinteren Abschnitt der Armlehne (2) vorgesehenen Welle (18) befestigt ist, und dass die Arretiervorrichtung (20) ein Haltemittel (22, 26) besitzt, das abnehmbar in ein Grundgestellrohr (10) eingeschoben werden kann, welches als Sitzgestell ausgebildet ist.

3. Sitz gemäß Anspruch 2, dadurch gekennzeichnet, dass das Haltemittel eine säulenförmige Gleitwelle (22) ist, die am unteren Ende des Stützglieds (17) in einer Hülse (21) vorgesehen ist, sich koaxial zum Grundgestellrohr (10) erstreckt und so das Sitzgestell bildet.

4. Sitz gemäß Anspruch 3, dadurch gekennzeichnet, dass ein Federglied zur Vorspannung der Gleitwelle (22) in Richtung auf die Innenseite des Grundgestellrohrs (10) vorgesehen ist.

5. Sitz gemäß Anspruch 4, dadurch gekennzeichnet, dass ein Leitblech, das sich kontinuierlich vom Endabschnitt des Grundgestellrohrs (10) aus erstreckt, vorgesehen ist.

6. Sitz gemäß einem der Ansprüche 3 bis 5, dadurch gekennzeichnet, dass die Gleitwelle (22) Arretiermittel (23) besitzt, welche in komplementäre Arretiermittel (24) eingreifen, die an der Gleitwelle (22) vorgesehen sind.

7. Sitz gemäß Anspruch 6, dadurch gekennzeichnet, dass das Arretiermittel (23) aus einem Paar Führungsstiften (23) besteht, die um die Außenfläche der Gleitwelle (22) herum angeordnet sind und gegeneinander in Durchmesserrichtung hervorstehen, und dass die komplementären Arretiermittel (24) aus im wesentlichen invers U-förmig ausgebildeten Führungsnuten (24) bestehen, die um die zylindrische Wand der Hülse (21) herum angeordnet sind.

8. Sitz gemäß Anspruch 7, dadurch gekennzeichnet, dass ein Federglied zur Vorspannung der Führungsstifte (23) in der Umfangsrichtung vorgesehen ist.

9. Sitz gemäß Anspruch 2, dadurch gekennzeichnet, dass das Haltemittel (22) eine Verschraubung (26) mit einer Schraube (26a) und einer Mutter (29), welche in dem Grundgestellrohr (10) eingearbeitet ist, ist.

10. Sitz gemäß Anspruch 9, dadurch gekennzeichnet, dass eine Halteführung (27) vorhanden ist, welche verhindert, dass die Verschraubung (26) in Richtung auf die Oberflächenseite der Halteführung (27) herausfällt beziehungsweise ein zu starkes Einschrauben der Schraubenspindel (26a) verhindert.

11. Sitz gemäß mindestens einem der Ansprüche 2 bis 10, dadurch gekennzeichnet, dass ein Winkelverkleinerungsbeschlag (31) an besagtem Sitzgestell befestigt ist, wobei der Winkelverkleinerungsbeschlag (31) eine Kreisbogenführungsnut (31a) und einen Stift (32) aufweist, der aus dem Armlehnengestell (16) hervorsteht und in die Führungsnut (31a) eingreift.

12. Sitz gemäß mindestens einem der Ansprüche 2 bis 11, dadurch gekennzeichnet, dass ein Federglied vorhanden ist, welches das Gewicht der Armlehne (2) ausgleicht.

13. Sitz gemäß Anspruch 1, dadurch gekennzeichnet, dass Gleitstücke (36) an der Armlehne (2) befestigt sind und beweglich in Schienen (33) verlaufen, welche vertikal im Sitzgestell befestigt sind, und dass die Arretiervorrichung (20) Verriegelungselemente (38) besitzt, die durch die Gleitstücke (36) und die Schienen (33) geschoben werden können.

14. Sitz gemäß Anspruch 13, dadurch gekennzeichnet, dass ein Verbindungsglied (44) drehbar zwischen den Verriegelungselementen (41) und einem Kurbelglied (45) gelagert ist.

15. Sitz gemäß der Ansprüche 13 oder 14, dadurch gekennzeichnet, dass die Verriegelungselemente (38) durch an tragenden Elementen (43) befestigte Führungselemente (41) geführt werden.

16. Sitz gemäß Anspruch 15, dadurch gekennzeichnet, dass die tragenden Elemente (43) an einem Verbindungsglied (42) befestigt sind und die Stützglieder (17) miteinander verbindet.

17. Sitz gemäß Anspruch 16, dadurch gekennzeichnet, dass das Kurbelglied (45) an dem Verbindungsglied (42) befestigt ist.

18. Sitz gemäß mindestens einem der Ansprüche 13 bis 17, dadurch gekennzeichnet, dass die Verriegelungselemente (38) Haltestifte (38) sind, welche in Durchgangslöcher (39) eintreten, die durch Perforationen in den Schienen (33) gebildet sind und die Führungskanten der Haltestifte (38) in Einbuchtungen (40) in die Gleitstücke (36) eingreifen.

19. Sitz gemäß mindestens einem der Ansprüche 13 bis 18, dadurch gekennzeichnet, dass Konsolen (34) zwischen den Schienen (33) angebracht sind und dass die Grundgestellrohre (10) ein Kippen der Schienen (33) verhindern.

20. Sitz gemäß mindestens einem der Ansprüche 13 bis 19, dadurch gekennzeichnet, dass ein Schienenstützblech (35) zwischen zwei Schienen (33) eingeschoben ist, um den Abstand zwischen den Schienen (33) aufrechtzuerhalten.

21. Sitz gemäß mindestens einem der vorerwähnten Ansprüche, dadurch gekennzeichnet, dass die Arretiervorrichtung (20) Verstellelemente (25, 30, 46) enthält, welche von der Außenfläche des Flügels (4) hervorstehen.

## Revendications

1. Siège pour véhicule comprenant un cadre de siège, un dossier de siège (8), une assise de siège (9), et au moins un accoudoir (2) comprenant un cadre d'accoudoir (16), une aile (4) disposée dans un plan vertical et fixée audit cadre au moyen d'un élément support (17) fixé audit cadre d'accoudoir (16), et une tablette (5) logée à l'intérieur de ladite aile (4), caractérisé en ce que ledit accoudoir (2) peut se déplacer vers le bas entre une première position, ou position normale, dans laquelle l'accès à ladite assise de siège (9) n'est possible que par l'avant dudit siège, et une seconde position, ou position d'accès, dans laquelle une partie latérale (9a) au moins de ladite assise de siège (9) est dégagée, et en ce que ledit accoudoir (2) est verrouillé dans ladite première position, ou position normale, au moyen d'un dispositif de verrouillage (20) situé dans ladite aile (4) et reliant ladite aile (4) à un dispositif support (10, 33), ledit dispositif support (10, 33) faisant partie dudit cadre de siège ou étant fixé sur celui-ci.

2. Siège selon la revendication 1, caractérisé en ce que ledit accoudoir (2) est fixé sur un axe de rotation horizontal (18) prévue sur la partie arrière dudit accoudoir (2), et en ce que ledit dispositif de verrouillage (20) comprend un élément de fixation (22, 26) pouvant être inséré de façon amovible dans un tube de cadre inférieur (10) adapté pour former ledit cadre de siège.

3. Siège selon la revendication 2, caractérisé en ce que ledit élément de fixation est une tige coulissante (22) en forme de cylindre qui est disposée à l'intérieur d'un manchon (21) prévu à l'extrémité inférieure dudit élément support (17) et positionné de façon coaxiale par rapport au tube de cadre inférieur (10) adapté pour former ledit cadre de siège.

4. Siège selon la revendication 3, caractérisé en ce qu'un élément de ressort est prévu pour exercer sur ladite tige coulissante (22) une force de rappel en direction de la face interne dudit tube de cadre inférieur (10).

5. Siège selon la revendication 4, caractérisé en ce qu'il est prévu une plaque de guidage continue partant de la partie terminale dudit tube de cadre inférieur (10).

6. Siège selon l'une au moins des revendications 3 à 5, caractérisé en ce que ladite tige coulissante comporte un moyen de verrouillage (23) qui s'engage dans un moyen de verrouillage complémentaire (24) prévu sur ladite tige coulissante (22).

7. Siège selon la revendication 6, caractérisé en ce que ledit moyen de verrouillage est constitué par deux tiges de guidage (23) prévues autour de la surface périphérique externe de ladite tige coulissante (22), de façon a dépasser de façon diamétralement opposée, et en ce que ledit moyen de verrouillage complémentaire est constitué par des rainures de guidage (24) ayant essentiellement la forme d'un U renversé, formées dans la paroi cylindrique dudit manchon (21).

8. Siège selon la revendication 7, caractérisé en ce qu'un élément de ressort est prévu pour exercer sur lesdites tiges de guidage (23), une force de rappel dans le sens de la circonférence.

9. Siège selon la revendication 2, caractérisé en ce que ledit élément de fixation est une vis de blocage (26) dont la partie filetée (26a) peut se visser dans un alésage taraudé (29) prévu dans ledit tube de cadre inférieur (10).

10. Siège selon la revendication 9, caractérisé en ce qu'un guide de verrouillage (27) est prévu pour empêcher que ladite vis de blocage (26) ne sorte de la surface latérale dudit guide de verrouillage (27) ou bien que ladite partie filetée (26a) ne se bloque par un serrage excessif.

11. Siège selon l'une au moins des revendications 2 à 10, caractérisé en ce qu'une plaque de limitation de débattement angulaire (31) est fixée audit cadre inférieur, ladite plaque de limitation de débattement angulaire (31) comportant une rainure de guidage (31a) en arc de cercle, et en ce qu'un ergot (32) dépassant dudit cadre d'accoudoir (16) est introduit dans ladite rainure de guidage (31a).

12. Siège selon l'une au moins des revendications 2 à 11, caractérisé en ce qu'un élément de ressort est prévu pour compenser le poids dudit accoudoir (2).

13. Siège selon la revendication 1, caractérisé en ce que des coulisseaux (36) sont fixés audit accoudoir (2) et peuvent glisser à l'intérieur de rails (33) fixés verticalement audit cadre de siège, et en ce que ledit dispositif de verrouillage (20) est doté d'éléments de verrouillage (38) qui peuvent être engagés de façon amovible en traversant lesdits coulisseaux (36) et lesdits rails (33).

14. Siège selon la revendication 13, caractérisé en ce qu'une biellette (44) est montée en rotation entre lesdits éléments de verrouillage (38) et un élément de manivelle (45).

15. Siège selon l'une ou l'autre des revendications 13 et 14, caractérisé en ce que lesdits éléments de verrouillage (38) sont guidés par des moyens de guidage (41) fixés sur des éléments supports (43).

16. Siège selon la revendication 15, caractérisé en ce que lesdits moyens supports (43) sont fixés sur un élément de liaison (42) reliant lesdits éléments supports (17).

17. Siège selon la revendication 16, caractérisé en ce que ledit élément de manivelle (45) est fixé sur ledit élément de liaison (42).

18. Siège selon l'une au moins des revendications 13 à 17, caractérisé en ce que lesdits éléments de verrouillage sont des tiges de verrouillage (38) passant à l'intérieur de trous traversants (39) percés dans lesdits rails (33), l'extrémité frontale desdites tiges de verrouillage (38) venant se loger dans des logements (40) prévus à l'intérieur desdits coulisseaux (36).

19. Siège selon l'une au moins des revendications 13 à 18, caractérisé en ce que des étriers (34) sont fixés entre lesdits rails (33) et les tubes de cadre inférieur (10) pour empêcher le basculement des dits rails (33).

20. Siège selon l'une au moins des revendications 13 à 19, caractérisé en ce qu'une platine support de rail (35) est disposée entre deux rails (33) pour maintenir l'écartement desdits rails (33).

21. Siège selon l'une quelconque des revendications précédentes, caractérisé en ce que ledit dispositif de verrouillage (20) comporte des éléments de commande de déplacement (25, 30, 46) qui dépassent de la surface externe de ladite aile (4).
